**Europäisches Patentamt**

**European Patent Office**

**Office européen des brevets**

(19)

(11) **EP 1 184 256 B1**

(12) # EUROPEAN PATENT SPECIFICATION

(45) Date of publication and mention
of the grant of the patent:
**31.03.2004 Bulletin 2004/14**

(51) Int Cl.$^7$: **B62D 5/04**

(21) Application number: **01119336.4**

(22) Date of filing: **10.08.2001**

(54) **Electrically-driven power steering system having failure detection function**

Elektrische Servolenkeinrichtung mit Fehlererkennungsfunktion

Dispositif de commande pour direction assistée électriquement avec fonction de détection de panne

(84) Designated Contracting States:
**DE ES FR GB IT**

(30) Priority: **28.08.2000 JP 2000256659**

(43) Date of publication of application:
**06.03.2002 Bulletin 2002/10**

(73) Proprietor: **Denso Corporation
Kariya-city, Aichi-pref., 448-8661 (JP)**

(72) Inventors:
• **Amakusa, Hideki, Denso Corporation
Kariya-city, Aichi-pref. 448-8661 (JP)**

• **Sato, Atsushi, Denso Corporation
Kariya-city, Aichi-pref. 448-8661 (JP)**

(74) Representative:
**Winter, Brandl, Fürniss, Hübner, Röss, Kaiser,
Polte Partnerschaft
Patent- und Rechtsanwaltskanzlei
Alois-Steinecker-Strasse 22
85354 Freising (DE)**

(56) References cited:
**EP-A- 0 800 979**      **US-A- 6 094 021**

## Description

The present invention relates to an electrically-driven power steering system for assisting a steering force of a steering wheel by using a motor according to the preamble of claim 1.

US-A-6 094 021, which constitutes the preamble of claim 1, discloses a conventional electrically-driven power steering system including a failure detection circuit for detecting an ON-state failure of field effect transistors (FETs) composing a bridge circuit (motor drive circuit).

The failure detection circuit includes high-resistance resistors respectively connected in parallel with each FET, and a voltage detection circuit connected between output terminals of the bridge circuit. A terminal voltage of the motor is detected by the voltage detection circuit when the motor is stopped, and the ON-state failure of the FETs is determined based on the detected voltage.

However, since the failure detection circuit performs the failure determination in a state that OFF-signals are respectively applied to each FET (when the motor is stopped), the failure detection circuit cannot detect the ON-state failure of FETs when the motor is driven. Therefore, when the ON-state failure of FETs cannot be overcome in a case that the failure occurs during the control time of driving the motor, a steering wheel rotates by itself, thereby not ensuring safety.

The present invention has therefore an object to provide an electrically-driven power steering system where an ON-state failure of FETs and a failure of terminals of a motor can be detected even during the control time of driving the motor.

This object is solved by the subject matter of claim 1.

In more detail, according to the subject matter of claim 1, a motor control unit includes an abnormality detection circuit for detecting an ON-state failure of field effect transistors and a failure of terminals of a motor. The abnormality detection circuit inputs a motor supply voltage, a motor right-terminal voltage and a motor left-terminal voltage, and detects abnormality by using the following detection logic in comparison with a threshold voltage V1:

$$|\text{motor supply voltage - motor right-terminal voltage - motor left-terminal voltage}| > V1.$$

According to this construction, the ON-state failure of the field effect transistors and the failure of the terminals of the motor can be detected not only when the motor is stopped but also when it is driven.

According to the subject matter of claim 2, the abnormality detection circuit includes a plurality of threshold values in accordance with the motor supply voltage.

The abnormality detection circuit has a threshold value (V1 > 0) in consideration of a detection error due to detection logic variations However, when the circuit fails, a large current flows therein, so that the motor supply voltage is reduced due to wiring resistance. In this case, since the motor supply voltage itself is reduced, it is probable that the detection logic is not satisfied even when the circuit fails. Therefore, a plurality of threshold values are set in accordance with the motor supply voltage.

The above and other objects, features and advantages of the present invention will become more apparent from the following detailed description made with reference to the accompanying drawings. In the drawings:

FIG. 1 is an entire schematic view showing an electrically-driven power steering system;
FIG. 2 is a schematic diagram showing a control system of the electrically-driven power steering system;
FIG. 3 is an electric circuit diagram showing a motor drive circuit;
FIG. 4 is a graphical representation showing a motor supply voltage and voltages at both terminals of the motor when a motor right-terminal is short-circuited to ground;
FIG. 5 is a graphical representation showing the motor supply voltage and the voltages at both terminals of the motor when a fourth FET has an ON-state failure;
FIG. 6 is a graphical representation showing the motor supply voltage and the voltages at both terminals of the motor when the motor right-terminal is short-circuited to a power supply and a second FET has an ON-state failure;
FIG. 7 is a graphical representation showing the motor supply voltage and the voltages at both terminals of the motor when the motor is stopped; and
FIG. 8 is a graphical representation showing the motor supply voltage and the voltages at both terminals of the motor when the motor is stopped and the motor right-terminal is short-circuited to the ground.

Next, an embodiment of the present invention will be described with reference to drawings.

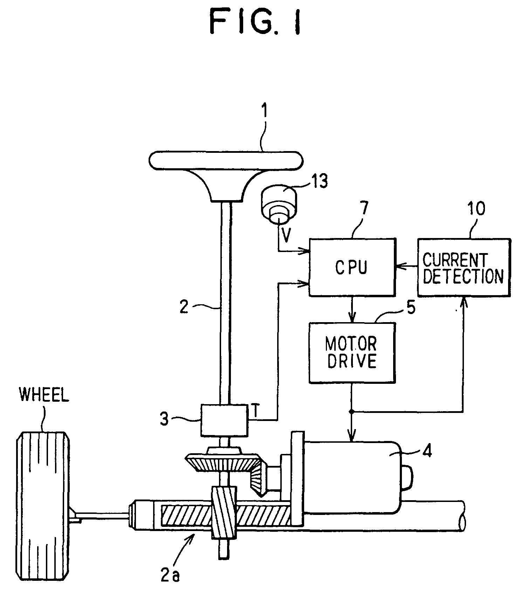

Referring first to FIG. 1, an electrically-driven power steering system has a steering wheel 1, a steering shaft 2 and a steering mechanism 2 connected to vehicle wheels. The system also includes a torque sensor 3 for detecting a steering torque generated by the steering shaft 2, a motor 4 for assisting a steering force of the steering wheel 1 by supplying a motive power to the steering mechanism 2a, a motor control unit which comprises a motor drive circuit 7, a microcomputer (CPU) 7 and a motor current detection circuit 10. The CPU 7 is connected to a torque sensor 3 and a vehicle speed sensor 13. The torque sensor 3, which detects the steering torque T by converting the torque to an electric signal, is composed of a potentiometer, for example. Its output voltage is changed in accordance with the steering torque generated by the steering shaft 2.

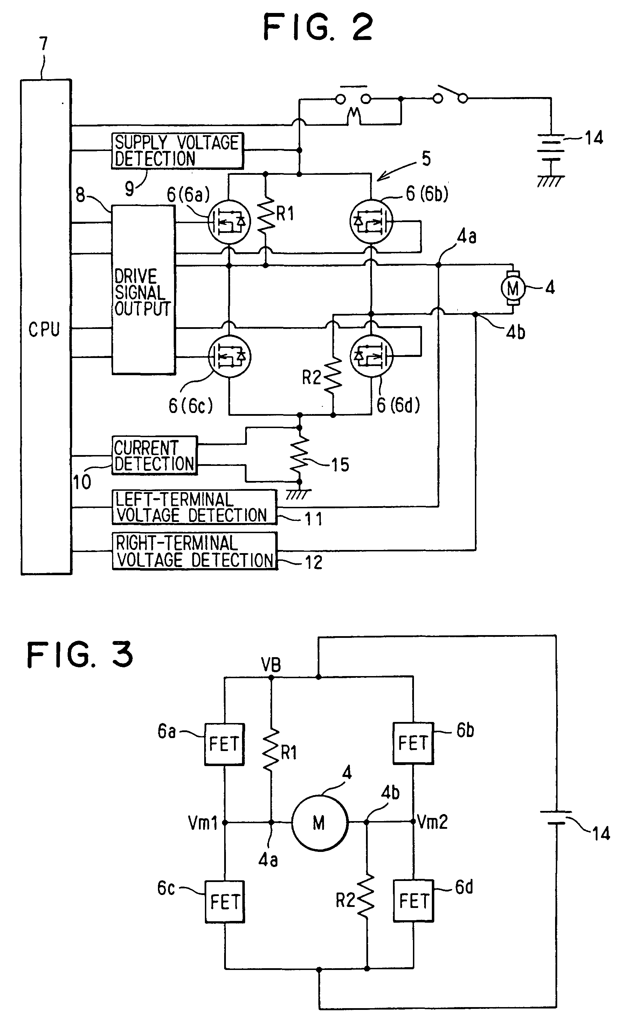

As shown in FIG. 2, the motor drive circuit 5 is an H-type bridge circuit composed of four FETs 6 (first FET 6a, second FET 6b, third FET 6c and fourth FET 6d), and drives the motor 4 with pulse-width-modulation (PWM) control in response to a motor drive signal (PWM signal) applied thereto.

The motor control unit is composed of the CPU 7, a drive signal output circuit 8, a power supply voltage detection circuit 9, the motor current detection circuit 10, a motor left-terminal voltage detection circuit 11, a motor right terminal voltage detection circuit 12, and the like.

The CPU 7 calculates a current command value based on a torque signal T from the torque sensor 3 and a speed signal V from the speed sensor 13. It also operates as an abnormality detection circuit for detecting a failure of the FETs 6 and a failure of terminals of the motor 4.

The drive signal output circuit 8 outputs the PWM signal based on the current command value calculated by the CPU 7. The power supply voltage detection circuit 9 detects a voltage supplied to the motor drive circuit 5 from a battery 14, and outputs a voltage signal corresponding to the voltage to the CPU 7.

The motor current detection circuit 10 detects a current flowing into the motor 4 using a voltage between both ends of a resistor 15 connected in series with the motor drive circuit 5 at a lower voltage side, and outputs a motor current signal to the CPU 7.

The motor left-terminal voltage detection circuit 11 detects a voltage of a motor left-terminal 4a connected to the motor drive circuit 5 (connection point between a source of the first FET 6a and a drain of the third FET 6c), and outputs a voltage signal to the CPU 7. The motor right-terminal voltage detection circuit 12 detects a voltage of a motor right-terminal 4b connected to the motor drive circuit 5 (connection point between a source of the second FET 6b and a drain of the fourth FET 6d), and outputs a voltage signal to the CPU 7.

The abnormality detection circuit (CPU 7) described inputs the motor supply voltage, the motor left-terminal voltage and the motor right-terminal voltage from the power supply voltage detection circuit 9, the motor left-terminal voltage detection circuit 11 and the motor right-terminal voltage detection circuit 12, respectively. Then, the abnormality detection circuit determines the failure of the FETs 6a through 6d and the failure of the terminals 4a, 4b of the motor 4 using the following detection logic in comparison with a predetermined threshold value V1:

$$|\text{motor supply voltage - motor right-terminal voltage}$$

$$\text{- motor left-terminal voltage } | > V1.$$

The above detection logic is determined from the motor supply voltage VB, the motor left-terminal voltage Vm1 and the motor right-terminal voltage Vm2 at the normal time.

when the motor 4 is driven, voltages Vm1, Vm2 corresponding to the motor drive voltage are generated at both terminals of the motor 4, respectively, in accordance with VB (power supply voltage) in a circuit configuration shown in FIG. 3.

When VB = 12V (volts), for example, the voltages Vm1, Vm2 are generated at voltages more than and less than 6V, respectively, and vice versa. Accordingly, when the motor drive voltage is 2V, 7V appears at the higher voltage terminal, and 5V appears at the lower voltage terminal.

If the following logic is used based on this relationship, the failure of the FETs 6 and the failure of the terminals 4a, 4b of the motor 4 can be detected.

$$|\text{motor supply voltage - Vm1 - Vm2}| \fallingdotseq 0 \text{ volt} \qquad ①$$

When the motor 4 is stopped, voltages Vm1, Vm2 divided by resistors R1, R2 (resistance value of R1 = resistance value of R2) are generated at both terminals of the motor, respectively, in accordance with the power supply voltage VB in a circuit configuration shown in FIG. 3. When VB = 12V, for example, the voltages Vm1, Vm2 become 6V in a case that a motor resistance value is within its variations.

If the following logic is used based on this relationship, the failure of the FETs 6 and the failure of the terminals 4a, 4b of the motor 4 can be detected:

|motor supply voltage - Vm1 - Vm2 | = 0V.

The abnormality detection circuit (CPU 7) operates as follows for abnormality detection.

(1) When the motor right-terminal 4b is short-circuited to ground (GND):

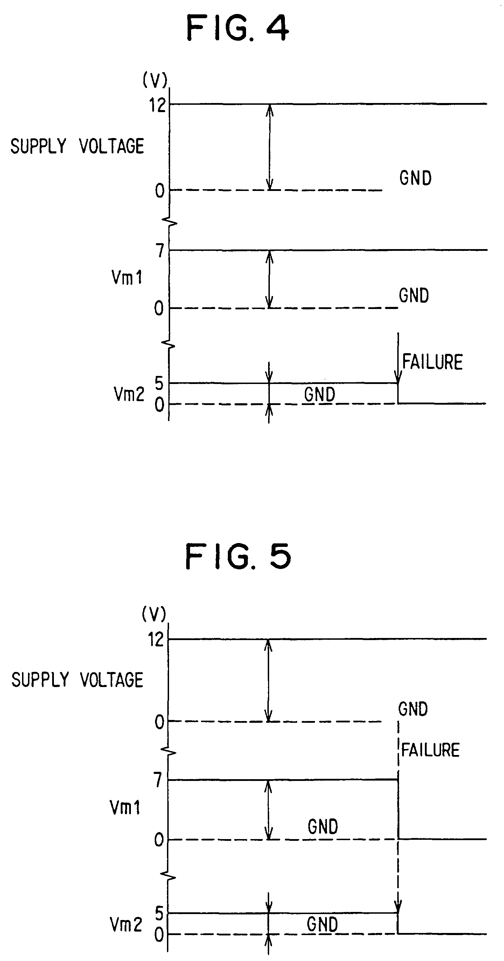

As shown in FIG. 4, since the voltage Vm2 at the motor right-terminal 4b becomes nearly equal to the voltage at the GND irrespective of the motor supply voltage, the relationship among the motor supply voltage, the motor right-terminal voltage Vm2 and the motor left-terminal voltage Vm1 becomes as follows:

|2V - 7V - 0V| > 0V.

Therefore, this relationship differs from the logic ① , and is determined to be abnormal.

(2) When the fourth FET 6d has the ON-state failure:

As shown in FIG. 5, since the voltages Vm1, Vm2 at both terminals 4a, 4b of the motor 4 become nearly equal to the voltage at the GND irrespective of the motor supply voltage, the relationship among the motor supply voltage, the motor right-terminal voltage Vm2 and the motor left-terminal voltage Vm1 becomes as follows:

|12V - 0V - 0V| > 0V.

Therefore, this relationship differs from the logic ① , and is determined to be abnormal.

(3) When the motor right-terminal 4b is short-circuited to the motor power supply:

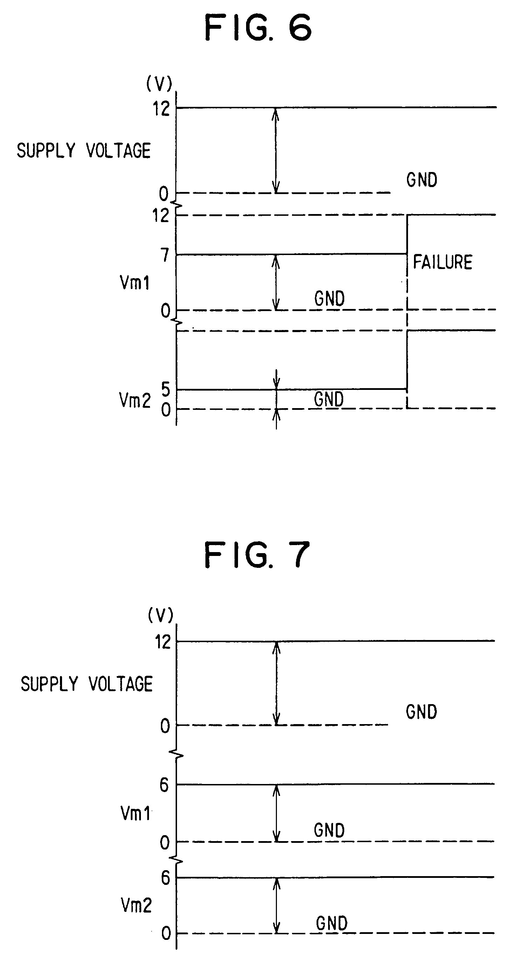

As shown in FIG. 6, since the voltages Vm1, Vm2 at both terminals 4a, 4b of the motor 4 become nearly equal to the voltage at the motor power supply in accordance with the motor supply voltage, the relationship among the motor supply voltage, the motor right-terminal voltage Vm2 and the motor left-terminal voltage Vm1 becomes as follows:

|12V - 12V - 12V| > 0 volt.

Therefore, this relationship differs from the logic ① , and is determined to be abnormal.

(4) When the second FET 6b has the ON-state failure:

The relationship is detected in the same manner as in the above case (3), and is determined to be abnormal.

(5) When the motor is stopped at the normal time:

Since the voltages at both terminals 4a, 4b of the motor 4 become as shown in FIG. 7, the relationship becomes as follows:

|12V - 6V - 6V| = 0V.

Therefore, this relationship satisfies the logic ① .

(6) When the motor is stopped and the motor right-terminal 4b is short-circuited to the GND (ON-state failure of the fourth FET 6d):

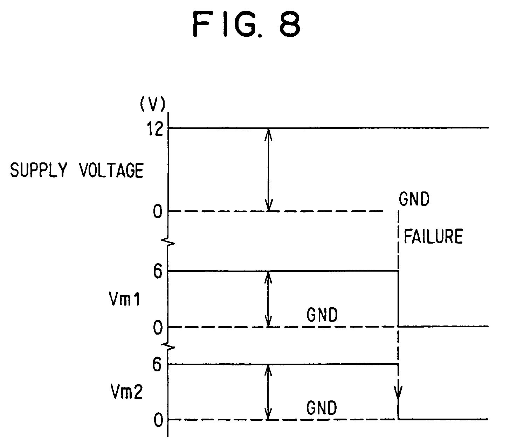

As shown in FIG. 8, since the voltages Vm1, Vm2 at both terminals 4a, 4b of the motor 4 become nearly equal to the voltage at the GND irrespective of the motor supply voltage, the relationship among the motor supply voltage, the motor right-terminal voltage Vm2 and the motor left-terminal voltage Vm1 becomes as follows:

|12V - 0V - 0V| > 0V.

Therefore, this relationship differs from the logic ① , and is determined to be abnormal.

The electrically-driven power steering system according to the present embodiment can make the abnormality determination using the abnormality detection circuit not only when the motor 4 is stopped but also when the motor 4 is driven, thereby surely detecting the ON-state failure of the FETs 6 and the failure of the terminals 4a, 4b of the motor 4.

Further, when the abnormality state is continuously detected for a predetermined time, steering-wheel manipulation can be prevented from being adversely affected due to the abnormality of the FETs 6 or the motor terminals 4a, 4b by stopping the system, thereby ensuring safety.

The abnormality detection circuit has a threshold value (V1 > 0) in consideration of a detection error due to detection logic variations. However, when the circuit fails, a large current flows therein, so that the motor supply voltage is reduced due to wiring resistance. In this case, since the motor supply voltage itself is reduced, it is likely that the detection logic is not satisfied even when the circuit fails. Therefore, plural threshold values may be set in accordance with the motor supply voltage.

**Claims**

1.  An electrically-driven power steering system comprising:

    a motor (4) for assisting a steering force of a steering wheel (1) by supplying motive power to a steering mechanism (2a) of the steering wheel (1);
    a motor drive circuit (5) including at least four field effect transistors (6, 6a-6d) forming a bridge circuit, for driving the motor in accordance with an ON/OFF-state of each field effect transistor (6a-6d); and
    a motor control unit (7) for controlling an operation of the motor (4) through the motor drive circuit (5), wherein the motor control unit (7) includes an abnormality detection circuit (7) for detecting an ON-state failure of the field effect transistors (6a-6d) and a failure of terminals (4a, 4b) of the motor (4); and
    the abnormality detection circuit (7) inputs a motor right-terminal voltage (Vm2) and a motor left-terminal voltage (Vm1),

      ***characterized by***

    a power supply voltage detection circuit (9), a motor left-terminal detection circuit (11) and a motor right-terminal detection circuit (12) for detecting a motor supply voltage, a voltage of a motor left-terminal (4a) and a voltage of a motor right terminal (4b), respectively, wherein
    the abnormality detection circuit (7) furthermore inputs the motor supply voltage and makes an abnormality detection using the following detection logic in comparison with a threshold voltage (V1):

      |motor supply voltage - motor right-terminal voltage (Vm2) - motor left-

      terminal voltage (Vm1)| > V1.

2.  The electrically-driven power steering system according to claim 1, wherein the abnormality detection circuit (7) includes a plurality of threshold values in accordance with the motor supply voltage.

**Patentansprüche**

1.  Elektrisch betriebenes Servolenkungssystem, das aufweist:

    einen Motor (4) zum Unterstützen einer Lenkkraft eines Lenkrads (1) durch Ausüben einer Bewegungskraft auf einen Lenkmechanismus (2a) des Lenkrads (1);
    eine Motoransteuerschaltung (5), die mindestens vier Feldeffekttransistoren (6, 6a bis 6d) beinhaltet, die eine Brückenschaltung ausbilden, zum Ansteuern des Motors in Übereinstimmung mit einem Einschalt/Ausschaltzustand von jedem Feldeffekttransistor (6a bis 6d); und
    eine Motorsteuereinheit (7) zum Steuern eines Betriebs des Motors (4) durch die Motoransteuerschaltung (5), wobei
    die Motorsteuereinheit (7) eine Abnormalitätserfassungsschaltung (7) zum Erfassen einer Einschaltzustandfehlfunktion der Feldeffekttransistoren (6a bis 6d) und einer Fehlfunktion von Anschlüssen (4a, 4b) des Motors beinhaltet; und
    die Abnormalitätserfassungsschaltung (7) eine Spannung (Vm2) des rechten Anschlusses des Motors und eine Spannung (Vm1) des linken Anschlusses des Motors aufnimmt,

      ***gekennzeichnet durch***

eine Energieversorgungsspannungs-Erfassungsschaltung (9), eine Erfassungsschaltung (11) des linken Anschlusses des Motors und eine Erfassungsschaltung (12) des rechten Anschlusses des Motors zum Erfassen einer Motorversorgungsspannung, einer Spannung des linken Anschlusses (4a) des Motors bzw. eine Spannung des rechten Anschlusses (4b) des Motors aufweist, wobei

die Abnormalitätserfassungsschaltung (7) weiterhin die Motorversorgungsspannung aufnimmt und eine Abnormalitätserfassng unter Verwendung der folgenden Erfassungslogik im Vergleich zu einer Schwellwertspannung (V1) durchführt:

|Motorversorgungsspannung - Spannung (Vm2) des rechten Anschlusses des Motors - Spannung (Vm1) des linken Anschlusses des

Motors| > V1.

**2.** Elektrisch betriebenes Servolenksystem nach Anspruch 1, wobei die Abnormalitätserfassungsschaltung (7) eine Mehrzahl von Schwellwerten in Übereinstimmung mit der Motorversorgungsspannung beinhaltet.

## Revendications

**1.** Système de direction assistée entraînée électriquement comprenant :

un moteur (4) destiné à assister une force de direction d'un volant de direction (1) en délivrant une puissance motrice à un mécanisme de direction (2a) du volant de direction (1) ;
un circuit d'attaque de moteur (5) comprenant au moins quatre transistors à effet de champ (6, 6a à 6d) formant un circuit en pont, pour entraîner le moteur conformément à un état actif/inactif de chaque transistor à effet de champ (6a à 6d) ; et
une unité de commande de moteur (7) destinée à commander un fonctionnement du moteur (4) par l'intermédiaire du circuit d'attaque du moteur (5), dans lequel
l'unité de commande de moteur (7) comprend un circuit de détection d'anomalie (7) destiné à détecter une panne de l'état actif des transistors à effet de champ (6a à 6d) et une panne des bornes (4a, 4b) du moteur (4) ; et
le circuit de détection d'anomalie (7) délivre en entrée une tension de borne droite du moteur (Vm2) et une tension de borne gauche du moteur (Vm1),

**caractérisé par**

un circuit de détection de tension d'alimentation (9), un circuit de détection de borne gauche du moteur (11) et un circuit de détection de borne droite du moteur (12) destinés à détecter une tension d'alimentation du moteur, une tension d'une borne gauche du moteur (4a) et une tension d'une borne droite du moteur (4b), respectivement, dans lequel
le circuit de détection d'anomalie (7) délivre de plus en entrée la tension d'alimentation du moteur et effectue une détection d'anomalie en utilisant la logique de détection suivante en comparaison avec une tension de seuil (V1) :

|tension d'alimentation du moteur - tension de borne

droite du moteur (Vm2) - tension de borne gauche du moteur

(Vm1)|>V1.

**2.** Système de direction assistée entraînée électriquement selon la revendication 1, dans lequel le circuit de détection d'anomalie (7) comprend une pluralité de valeurs de seuil conformément à la tension d'alimentation du moteur.

# F I G. 1

WHEEL

CPU

CURRENT DETECTION

MOTOR DRIVE

EP 1 184 256 B1

# FIG. 2

# FIG. 3

# FIG. 4

SUPPLY VOLTAGE

(V)

12 — — — — — — — —

GND

0 - - - - - - - -

Vm1

7 — — — — — — — —

GND

0 - - - - - - - -

FAILURE

Vm2

5 ————————

GND

0 - - - - - - - -

# FIG. 5

SUPPLY VOLTAGE

(V)

12 — — — — — — — —

GND

0 - - - - - - - -

FAILURE

Vm1

7 — — — — — — — —

GND

0 - - - - - - - -

Vm2

5 ————————

GND

0 - - - - - - - -

# FIG. 6

# FIG. 7

# FIG. 8